# EUROPÄISCHE PATENTSCHRIFT

(11) **EP 2 491 270 B1**
(45) Veröffentlichungstag und Bekanntmachung des Hinweises auf die Patenterteilung: **06.05.2015**
(21) Anmeldenummer: 10771011.3
(22) Anmeldetag: 15.10.2010
(51) Int. Cl.: F16F 15/12, F16C 25/08, F16C 27/04, F16F 15/124

(54) **VORRICHTUNG ZUR SCHWINGUNGSDÄMPFUNG IN EINEM GETRIEBE**
DEVICE FOR VIBRATION DAMPING IN A GEAR UNIT
DISPOSITIF POUR L'AMORTISSEMENT DES VIBRATIONS DANS UN MÉCANISME DE TRANSMISSION

(30) Priorität: 19.10.2009 DE 102009049928
(43) Veröffentlichungstag der Anmeldung: 29.08.2012
(73) Patentinhaber: Kendrion Linnig GmbH, 88677 Markdorf (DE)
(72) Erfinder: GEBHART, Manfred, 78462 Konstanz (DE)
(74) Vertreter: Dobler, Markus
(86) Internationale Anmeldenummer: PCT/EP2010/006311
(87) Internationale Veröffentlichungsnummer: WO 2011/047807

(56) Entgegenhaltungen:
- EP-A1- 0 239 401
- EP-A2- 0 836 026
- DE-A1- 4 227 366
- DE-A1- 10 216 082
- DE-A1- 19 821 988
- US-A1- 2004 082 390

## Beschreibung

Die Erfindung betrifft eine Vorrichtung zur Schwingungsdämpfung in einem Getriebe nach dem Oberbegriff dies Anspruchs 1.

### Stand der Technik:

Vorrichtungen zur Schwingungsdämpfung in Getrieben sind in verschiedenen Ausführungen bekannt. Häufig wird in einer drehbaren Anordnung eine Antriebsseite mit einer Abtriebsseite durch Dämpfungselemente gekoppelt, die innerhalb eines vorgegebenen maximalen Verdrehwinkels dämpfend wirken. Eine solche Vorrichtung ist z.B. aus der DE 102 16 082 A1 bekannt. Dabei sind auch Lösungen bekannt, die unterschiedliche Dämpfungselemente zur Übertragung sowohl schwächerer als auch stärkerer Drehmomente vorsehen. Bei der Übertragung von Bewegungen sind solche schwingungsdärnpfenden Anordungen im Betrieb starken, verschiedenartig einwirkenden Kräften und Schwingungen ausgesetzt.

### Aufgabe und Vorteile der Erfindung:

Der Erfindung liegt die Aufgabe zugrunde, eine variabel einsetzbare Vorrichtung zur Schwingungsdämpfung in Getrieben, insbesondere in solchen zum Antrieb von Hilfsaggregaten in Kraftfahrzeugen mit Verbrennungsmotoren, bereitzustellen, deren Funktionstüchtigkeit durch Verschleiß vergleichsweise weniger gefährdet wird.

Diese Aufgabe wird durch eine Vorrichtung zur Schwingungsdämfung mit den Merkmalen des Anspruchs 1 gelöst.

In den abhängigen Ansprüchen sind vorteilhafte und zweckmäßige Weiterbildungen der Erfindung aufgezeigt.

Die Erfindung geht von einer Vorrichtung zur Schwingungsdämpfung in einem Getriebe mit zwei drehbar gelagerten Teilen, mit einem gegenüber den drehbar gelagerten Teilen feststehenden Lagerträger und mit Dämpfungselementen für eine dämpfende Übertragung einer Drehbewegung zwischen den beiden drehbar gelagerten Teilen aus. Der Kern der Erfindung besteht darin, dass der Lagerträger ein Spannarm ist, und dass zwischen jedem der beiden drehbar gelagerten Teile und dem denen gegenüber feststehenden Spannarm ein Drehlager vorgesehen ist, mit welchem das jeweilige Teil unabhängig vom anderen Teil am feststehenden Spannarm gelagert ist.

Dies bedeutet, dass sich bei jedem drehbar gelagerten Teil jeweils ein Teil des Drehlagers, z.B. ein Lagerring, sich bei Bewegung mit dem jeweiligen drehbar gelagerten Teil mitbewegt, während der andere Teil des jeweiligen Drehlagers im feststehenden Spannarm ruht. Aufgrund der Kopplung zwischen den beiden drehbar gelagerten Teilen werden somit beide Drehlager bei Antrieb in Bewegung versetzt. Daher gewahrleistet eine solche getrennte Lagerung der drehbaren Teile den wesentlichen Vorteil, dass sich keine Stillstandsmarkierungen in den Drehlagern ausbilden können, wodurch solche funktionsbeeinträchtigenden Schäden konstruktionsbedingt wirkungsvoll vermieden werden.

Dieser Vorteil wird durch Vergleich mit einer Anordnung, in der die beiden drehbar gelagerten Teile konzentrisch, unmittelbar aneinander und relativ zueinander drehbar gelagert sind, deutlich. Denn in solchen unmittelbar aneinander gelagerten Anordnungen der drehbaren Teile können in einem Lager zwischen den beiden drehbaren Teilen aufgrund der dämpfenden Kopplung nur vergleichsweise kleine Drehbewegungen um eine mittlere Position stattfinden, die sich über längere Zeit an entsprechenden Stellen des dazwischenliegenden Lagers in Verschleißdeformationen an den Lagerelementen widerspiegeln.

Ein weiterer Vorteil der erfindungsgemäßen Vorrichtung zur Schwingungsdämpfung ist darin zu sehen, dass auf die Dämpfungselemente nur Kräfte zur Übertragung von Drehmomenten zwischen den beiden drehbar gelagerten Teilen wirken, während Lagerkräfte überwiegend von den Drehlagern der drehbar gelagerten Teile aufgenommen und an den feststehenden Spannarm aufgenommen werden. Durch die geringere Beanspruchung können die Funktion der Dämpfungselemente vorteilhaft länger erhalten werden. Demgegenüber lasten auf Vorrichtungen zur Schwingungsdämpfung, in denen sich Dämpfungselemente zwischen zwei konzentrisch zueinander angeordneten Drehelementen eines drehbar gelagerten Teils befinden, sowohl statische als auch dynamische Antriebskräfte, wobei sich die statischen Kräfte auf die Dämpfungselemente unter Drehbewegung teilweise ebenfalls als dynamische Kräfte auswirken können.

In einer bevorzugten Ausführung der Vorrichtung wird das jeweilige Teil unmittelbar am feststehenden Spannarm gelagert. Dies bietet den Vorteil, dass der Spannarm aus wenigen Teilen zusammengesetzt und beispielsweise einstückig ausgebildet werden kann.

Eine weitere bevorzugte Ausbildung der Erfindung besteht darin, dass zwischen den drehbar gelagerten Teilen Anschläge vorgesehen sind. Dies bietet den Vorteil, dass auch die Übertragung großer Antriebsmomente ermöglicht wird. Dabei bieten mechanische Anschläge vorteilhaft die Möglichkeit, einen maximalen Verdrehwinkel zwischen den beiden drehbar gelagerten Teilen vorzugeben. Dabei ist auch denkbar, mechanische Anschläge auf überlastende Momente in der Weise auszulegen, dass solche Anschläge bei Auftreten einer Überlastung ausfallen und jegliche Kopplung zwischen den beiden drehbar gelagerten Teilen entfällt.

Eine ebenfalls bevorzugte Ausführung der Erfindung sieht vor, dass mindestens ein drehbar gelagertes Teil eine Riemenscheibe ist. Dadurch kann mindestens ein drehbar gelagertes Teil hinsichtlich seiner Größe und seines Gewichts an die Bedingungen eines Teils eines Getriebes, insbesondere eines Riemenantriebs angepasst werden.

Vorzugsweise weist ein drehbar gelagertes Teil einen Flansch auf, an den ein weiteres Bauteil angebracht werden kann. Der Flansch bietet den Vorteil, dass die Vorrichtung zur Schwingungsdämpfung als solche durch Befestigung verschiedener Bauteile, beispielsweise verschiedener Antriebselemente, leicht an unterschiedliche Anwendungsfälle angepasst werden kann.

Eine weitere bevorzugte Ausführung der Vorrichtung zur Schwingungsdämpfung besteht darin, dass eine Lageraufnahme des Spannarms drehbar angebracht ist. Dies bietet beispielsweise vorteilhaft die Möglichkeit zum Beispiel im Rahmen einer Wartung die Lageraufnahme ein Stück weiter zu drehen, um einseitige Abnutzungserscheinungen bzw. auch Ablagerungen in den Drehlagern zu vermeiden.

Weiterhin ist es bevorzugt, dass eine Drehwelle des ersten drehbar gelagerten Teils in eine zentrale Bohrung des zweiten drehbar gelagerten Teils hineinreicht. Dies bietet vorteilhaft die Möglichkeit, Dämpfungselemente zumindest eines drehbar gelagerten Teiles radial in der Weise anzuordnen, dass sie radial in das zweite drehbar gelagerte Teil bzw. dessen Dämpfungselemente verzahnt ineinander greifen um eine dämpfende Übertragung einer Drehbewegung zu ermöglichen.

Besonders bevorzugt ist es, dass eine Drehwelle des ersten drehbar gelagerten Teils in eine zentrale Bohrung des zweiten drehbar gelagerten Teils hindurchreicht. Dies bietet den Vorteil, dass die Dämpfungselemente an dem drehbar gelagerten Teil mit der zentralen Bohrung seitlich an bzw. in dieses Teil eingreifen können, dabei kann der Eingriff bei größerem Radius stattfinden, sodass kleinere Kräfte auf die Dämpfungselemente wirken.

Vorzugsweise wird eine Drehwelle eines drehbar gelagerten Teils konzentrisch zur Drehachse des zweiten Teils angeordnet. Dies bietet den Vorteil eines einfachen und kostengünstigen Aufbaus der Vorrichtung. Außerdem lassen sich bei einem solchen Aufbau Reibungskräfte während der Bewegung der beiden drehbar gelagerten Teile leichter vermeiden.

In einer weiteren bevorzugten Ausführung der Erfindung wirken Dämpfungselemente, die mit dem ersten der beiden drehbar gelagerten Teile verbunden sind, mit Dämpfungselementen des zweiten drehbar gelagerten Teils magnetisch zusammen. Dies bietet den Vorteil, dass vergleichsweise kleine Momente, beispielsweise zur Überwindung eines Bewegungsspiels im Getriebe, aufgebracht werden können.

Die erfindungsgemäße Vorrichtung zur Schwingungsdämpfung stellt keine besonderen Voraussetzungen an die Art des Getriebes, für die es ausgebildet wird. Daher kann die Erfindung vorteilhaft ebenso in einem Zugmittelgetriebe, beispielsweise einem Treibriemen- oder Kettengetriebe, wie auch in einem Zahnradgetriebe, das Reibradgetriebe einschließt, verwendet werden.

### Ausführungsbeispiel:

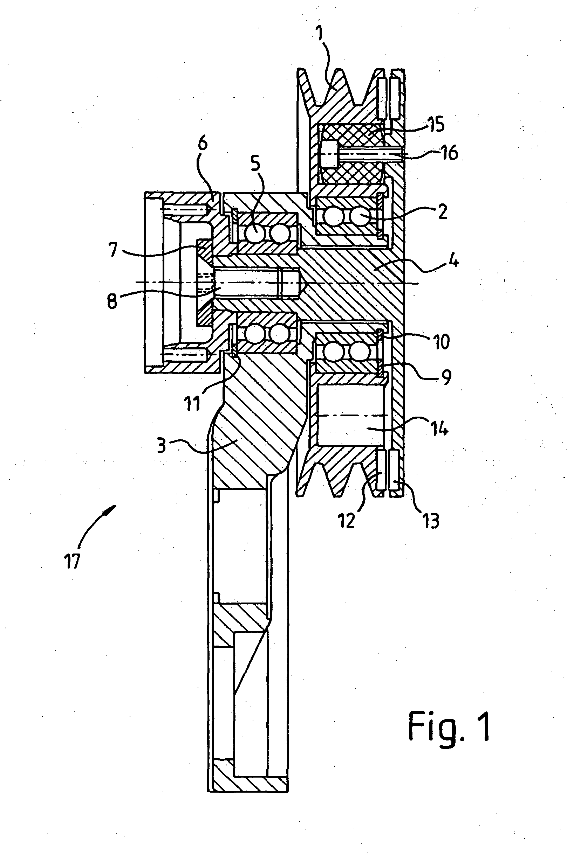

Anhand der Zeichnung wird ein Ausführungsbeispiel der erfindungsgemäßen Vorrichtung zur Schwingungsdämpfung beschrieben, wobei weitere Merkmale und Vorteile der Erfindung erläutert werden. Die einzige Figur zeigt einen schematischen Schnitt durch eine erfindungsgemäße Vorrichtung zur Schwingungsdämpfung.

Als Beispiel für eine Ausführung der Erfindung zeigt die Figur einen Drehschwingungsdämpfer 17 zum Antrieb über einen Treibriemen durch einen Verbrennungsmotor, wobei Motor und Treibriemen in der Figur nicht dargestellt werden. Der Riemenantrieb erfolgt über eine Riemenscheibe 1, die die mittels eines Lagers 2 auf einem Spannarm 3 lagert. Die Lagerstelle 2 nimmt die axialen und radialen Kräfte auf. Zusammen mit einem Flansch 6 bildet eine Welle 4 in dieser Anordnung ein zweites drehbar gelagertes Teil. Anders als hier gezeigt, ist auch eine Anordnung der drehbaren gelagerten Teile auf nur einer Seite des Spannarms denkbar.

Die Antriebswelle 4 ist über ein Lager 5 ebenfalls unmittelbar im Spannarm 3 gelagert. Dabei nimmt auch die Lagerstelle 5 sowohl axiale als auch radiale Kräfte der Anordnung auf. Der Antriebsflansch 6 ist form- und/oder reibschlüssig auf der Antriebswelle 4 montiert. Mit der Scheibe 7, verschraubt mit der Schraube 8 ist die Position der Antriebswelle 4 über das Lager 5 gesichert. Weiterhin sind die Lager 2 und 5 durch die Sicherungsringe 9, 10 und 11 in ihrer axialen Position gehalten.

Die Riemenscheibe 1 weist kreisförmig Nuttaschen auf, in welche die Anschlagssegmente 15, die durch Verschraubung 16 an der Antriebswelle 4 montiert sind, hineinragen. Gegenüber dem Außendurchmesser der Anschlagssegmente 15 können die Nuttaschen einen größeren Innendurchmesser aufweisen bzw. kreisbogenartig geweitet sein. Dadurch bestimmen die Nuttaschen 14 und die Anschldgssegemente 15 einen maximal erreichbaren Verdrehwinkel zwischen der Riemenscheibe 1 und dem Antriebsflansch 6. Die Anschlagssegmente 15 weisen an ihrer zylinderförmigen Oberfläche eine Gummibeschichtung auf, sodass sie gedämpft am Innenrand der Nuttaschen anschlagen.

Zudem sind an der Antriebswelle 4 Magnete 13 angebracht, denen am Riemenrad 1 die Magnete 12 gegenüberstehen. Mit Hilfe der Anziehungskraft zwischen den Magneten 12 und 13 wird eine Vorzugsposition der Anschlagelemente 16 hinsichtlich ihrer Verdrehbarkeit innerhalb der Nuttaschen 14 vorgegeben. Auf diese Weise kann der Drehschwingungsdämpfer 17 vergleichsweise kleine Drehmomente übertragen, mit deren Hilfe beispielsweise Zahnflanken zum Anliegen gebracht werden, um störende Getriebegeräusche durch das Antriebssystem zu vermindern oder zu vermeiden.

### Bezugszeichenliste:

- 1: Riemenscheibe
- 2: Lager
- 3: Spannarm
- 4: Antriebswelle
- 5: Lager
- 6: Abtriebsflansch
- 7: Scheibe
- 8: Schraube
- 9: Sicherungsring
- 10: Sicherungsring
- 11: Sicherungsring
- 12: Magnet
- 13: Magnet
- 14: Nuttasche
- 15: Anschlagsegment
- 16: Verschraubung
- 17: Drehschwingungsdämpfer

## Patentansprüche

1. Vorrichtung (17) zur Schwingungsdämpfung in einem Getriebe mit zwei drehbar gelagerten Teilen (1,4), mit einem gegenüber den drehbar gelagerten Teilen (1,4) feststehenden Lagerträger und mit Dämpfungselementen (12,13,14,15) für eine dämpfende Übertragung einer Drehbewegung zwischen den beiden drehbar gelagerten Teilen (1,4), **dadurch gekennzeichnet, dass** der Lagerträger ein Spannarm (3) ist, und dass zwischen jedem der beiden drehbar gelagerten Teile (1,4) und dem denen gegenüber feststehenden Spannarm (3) ein Drehlager (2,5) vorgesehen ist, mit welchem das jeweilige Teil (1,4) unabhängig vom anderen Teil (1,4) am feststehenden Spannarm (3) gelagert ist.

2. Vorrichtung (17) zur Schwingungsdämpfung nach Anspruch 1, dass das jeweilige Teil (1,4) unmittelbar am feststehenden Spannarm (3) gelagert ist.

3. Vorrichtung (17) zur Schwingungsdämpfung nach einem der vorhergehenden Ansprüche, dass zwischen den drehbar gelagerten Teilen (1,4) Anschläge (14, 15) vorgesehen sind.

4. Vorrichtung (17) zur Schwingungsdämpfung nach einem der vorhergehenden Ansprüche, **dadurch gekennzeichnet, dass** mindestens ein drehbar gelagertes Teil (1,4) eine Riemenscheibe ist.

5. Vorrichtung (17) zur Schwingungsdämpfung nach einem der vorhergehenden Ansprüche, **dadurch gekennzeichnet, dass** eine Lageraufnahme des Spannarms (3) drehbar angebracht ist.

6. Vorrichtung (17) zur Schwingungsdämpfung nach einem der vorhergehenden Ansprüche, **dadurch gekennzeichnet, dass** mindestens ein drehbar gelagertes Teil (1,4) einen Flansch (6) aufweist, an dem ein weiteres Bauteil angebracht werden kann.

7. Vorrichtung (17) zur Schwingungsdämpfung nach einem der vorhergehenden Ansprüche, **dadurch gekennzeichnet, dass** die Drehwelle (4) des ersten drehbar gelagerten Teils (4) in eine zentrale Bohrung des zweiten drehbar gelagerten Teils (1) hineinreicht.

8. Vorrichtung (17) zur Schwingungsdämpfung nach einem der vorhergehenden Ansprüche, **dadurch gekennzeichnet, dass** die Drehwelle (4) des ersten drehbar gelagerten Teils (4) in eine zentrale Bohrung des zweiten drehbar gelagerten Teils (1) hindurchreicht.

9. Vorrichtung (17) zur Schwingungsdämpfung nach einem der vorhergehenden Ansprüche, **dadurch gekennzeichnet, dass** die Drehwelle (4) konzentrisch zur Drehachse des zweiten Teils (1) angeordnet ist.

10. Vorrichtung (17) zur Schwingungsdämpfung nach einem der vorhergehenden Ansprüche, **dadurch gekennzeichnet, dass** Dämpfungselemente (12,13), die mit dem Ersten der beiden drehbar gelagerten Teile (1,4) verbunden sind, mit Dämpfungselementen (12,13) des zweiten drehbar gelagerten Teils (1,4) magnetisch zusammenwirken.

11. Vorrichtung (17) zur Schwingungsdämpfung nach einem der vorhergehenden Ansprüche, **dadurch gekennzeichnet, dass** das Getriebe ein Zugmittelantrieb ist.

12. Vorrichtung (17) zur Schwingungsdämpfung nach einem der vorhergehenden Ansprüche, **dadurch gekennzeichnet, dass** das Getriebe ein Zahnradgetriebe ist.

## Claims

1. A device (17) for vibration damping in a transmission with two pivoted components (1, 4), a bearing support which is fixed with respect to the two pivoted components (1, 4) and damping elements (12, 13, 14, 15) for damping transmission of rotary motion between the two pivoted components (1, 4), **characterised in that** the bearing support is a tensioning arm (3) and that provided between each of the two pivoted components (1, 4) and the tensioning arm (3) fixed with respect to them is a rotary bearing (2, 5) with which the respective component (1, 4) is mounted on the fixed tensioning arm (3) independently of the other component (1, 4).

2. A device (17) for vibration damping as claimed in Claim 1, **characterised in that** the respective component (1, 4) is directly mounted on the fixed tensioning arm (3).

3. A device (17) for vibration damping as claimed in one of the preceding claims, **characterised in that** abutments (14, 15) are provided between the pivoted components (1, 4).

4. A device (17) for vibration damping as claimed in one of the preceding claims, **characterised in that** at least one pivoted component (1, 4) is a pulley.

5. A device (17) for vibration damping as claimed in one of the preceding claims, **characterised in that** a bearing mount of the tensioning arm (3) is rotatably mounted.

6. A device (17) for vibration damping as claimed in one of the preceding claims, **characterised in that** at least one pivoted component (1, 4) includes a flange (6), on which a further component can be mounted.

7. A device (17) for vibration damping as claimed in one of the preceding claims, **characterised in that** the rotary shaft (4) of the first pivoted component (4) extends into a central bore of the second pivoted component (1).

8. A device (17) for vibration damping as claimed in one of the preceding claims, **characterised in that** the rotary shaft (4) of the first pivoted component (4) extends through a central bore of the second pivoted component (1).

9. A device (17) for vibration damping as claimed in one of the preceding claims, **characterised in that** the rotary shaft (4) is arranged concentrically with the rotary axis of the second component (1).

10. A device (17) for vibration damping as claimed in one of the preceding claims, **characterised in that** damping elements (12, 13), which are connected to the first of the two pivoted components (1, 4), cooperate magnetically with damping elements (12, 13) of the second pivoted component (1, 4).

11. A device (17) for vibration damping as claimed in one of the preceding claims, **characterised in that** the transmission is a power transmission drive.

12. A device (17) for vibration damping as claimed in one of the preceding claims, **characterised in that** the transmission is a gear drive.

## Revendications

1. Dispositif (17) pour l'amortissement des vibrations dans un mécanisme de transmission, comprenant deux parties (1, 4) montées en rotation, un support de roulement fixe par rapport aux parties (1, 4) montées en rotation, et des éléments d'amortissement (12, 13, 14, 15) pour un transfert amorti d'un mouvement de rotation entre les deux parties (1, 4) montées en rotation, **caractérisé en ce que** le support de roulement est un bras de mise en tension (3), et **en ce qu'**un coussinet de pivotement (2, 5) au moyen duquel la partie (1, 4) respective est montée, indépendamment de l'autre partie (1, 4), sur le bras de mise en tension fixe (3), est disposée entre chacune des deux parties (1, 4) montées en rotation et le bras de mise en tension (3) fixe par rapport à ces dernières.

2. Dispositif (17) pour l'amortissement des vibrations selon la revendication 1, **caractérisé en ce que** la partie (1, 4) respective est montée directement sur le bras de mise en tension (3) fixe.

3. Dispositif (17) pour l'amortissement des vibrations selon l'une quelconque des revendications précédentes, **caractérisé en ce que** des butées (14, 15) sont disposées entre les parties (1, 4) montées en rotation.

4. Dispositif (17) pour l'amortissement des vibrations selon l'une quelconque des revendications précédentes, **caractérisé en ce qu'**au moins une partie (1, 4) montée en rotation est une poulie à courroie.

5. Dispositif (17) pour l'amortissement des vibrations selon l'une quelconque des revendications précédentes, **caractérisé en ce qu'**un logement de roulement du bras de mise en tension (3) est monté en rotation.

6. Dispositif (17) pour l'amortissement des vibrations selon l'une quelconque des revendications précédentes, **caractérisé en ce qu'**au moins une partie (1, 4) montée en rotation comprend un rebord (6) sur lequel un autre élément peut être fixé.

7. Dispositif (17) pour l'amortissement des vibrations selon l'une quelconque des revendications précédentes, **caractérisé en ce que** l'arbre rotatif (4) de la première partie (4) montée en rotation s'étend dans un trou central de la seconde partie (1) montée en rotation.

8. Dispositif (17) pour l'amortissement des vibrations selon l'une quelconque des revendications précédentes, **caractérisé en ce que** l'arbre rotatif (4) de la première partie (4) montée en rotation pénètre dans un trou central de la seconde partie (1) montée en rotation.

9. Dispositif (17) pour l'amortissement des vibrations selon l'une quelconque des revendications précédentes, **caractérisé en ce que** l'arbre rotatif (4) est disposé de manière concentrique par rapport à l'axe de rotation de la seconde partie (1) montée en rotation.

10. Dispositif (17) pour l'amortissement des vibrations selon l'une quelconque des revendications précédentes, **caractérisé en ce que** des éléments d'amortissement (12, 13), lesquels sont reliés à la première des deux parties (1, 4) montées en rotation, coopèrent magnétiquement avec des éléments d'amortissement (12, 13) de la seconde partie (1, 4) montée en rotation.

11. Dispositif (17) pour l'amortissement des vibrations selon l'une quelconque des revendications précédentes, **caractérisé en ce que** la transmission est un dispositif de transmission par lien souple.

12. Dispositif (17) pour l'amortissement des vibrations selon l'une quelconque des revendications précédentes, **caractérisé en ce que** la transmission est une transmission par engrenages.
